(19) Europäisches Patentamt
European Patent Office
Office européen des brevets

(11) **EP 2 175 359 A2**

(12) # EUROPEAN PATENT APPLICATION

(43) Date of publication:
**14.04.2010 Bulletin 2010/15**

(51) Int Cl.:
***G06F 3/048*** *(2006.01)*

(21) Application number: **09171332.1**

(22) Date of filing: **25.09.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **08.10.2008 US 103781 P**

(71) Applicant: **Research in Motion
Waterloo,
Ontario N2L 3W8 (CA)**

(72) Inventor: **Henhoffer, Michael J
Waterloo Ontario N2L 5Z5 (CA)**

(74) Representative: **Patel, Binesh
Barker Brettell LLP
10-12 Priests Bridge
London
SW15 5JE (GB)**

(54) **An electronic device having a state aware touchscreen**

(57) An electronic device having a touchscreen display. A graphical user interface (GUI) is displayed on the touchscreen display that includes a user interface element displayed in a default state at a location, the user interface element being associated with a function. The user interface element is changed from the default state to a first state upon detecting a first input event at the location. The user interface element is changed from the first state to a second state upon detecting a second input event at the location.

```
         ┌─────────────────────┐
 1300 ───│    DISPLAY USER     │
         │  INTERFACE ELEMENT  │
         │   IN DEFAULT STATE  │
         └──────────┬──────────┘
                    │
         ┌──────────▼──────────┐
 1305 ───│    DETECT FIRST     │
         │     INPUT EVENT     │
         └──────────┬──────────┘
                    │
         ┌──────────▼──────────┐
         │  CHANGE DISPLAY OF  │
 1310 ───│   USER INTERFACE    │
         │  ELEMENT TO A FIRST │
         │        STATE        │
         └──────────┬──────────┘
                    │
         ┌──────────▼──────────┐
 1315 ───│    DETECT SECOND    │
         │     INPUT EVENT     │
         └──────────┬──────────┘
                    │
         ┌──────────▼──────────┐
         │  CHANGE DISPLAY OF  │
 1320 ───│   USER INTERFACE    │
         │    ELEMENT TO A     │
         │    SECOND STATE     │
         └─────────────────────┘
```

**FIG. 13**

EP 2 175 359 A2

**Description**

## TECHNICAL FIELD

The present disclosure relates generally to touchscreen displays and toolbars or function buttons provided using such displays.

## BACKGROUND

Handheld electronic devices having a touchscreen display typically display a toolbar having one or more buttons associated with the functions available on the device. Touchscreen or toolbar displays on such devices typically are small and limited in the number of functions that can be accommodated. Touchscreen displays also may be complex and sensitive to both contact by a stylus or a user's finger and the pressure or force exerted on the touchscreen when a button or area on the touchscreen is pressed and activated. A function is typically activated when the button is pressed with enough force to activate one or more mechanical / electrical switches associated with the touchscreen. In some touchscreen displays, the user receives no confirmation that a touchscreen button was activated. Alternatively, the user may receive confirmation that a touchscreen button was activated only by feeling or hearing a mechanical change in the touchscreen device such as a mechanical click, or by seeing the desired function actually execute. A user also may not be aware of which button was selected and activated. If there is an appreciable delay in the activation of a button and the function executing, a user may determine that the button was not activated or that the wrong button was selected and activated, and the user may continue to select and activate the button by repeatedly pressing on the touchscreen.

As well, the user may not be aware of a function associated with a toolbar button. During operation, different applications may assign different functions to the toolbar buttons on the touchscreen display. The assigned functions also may change within the application depending on the actions that are taken within the context of the application. However, a user may not be aware of or remember the functions associated with the toolbar.

## SUMMARY

According to one example embodiment there is provided a method of controlling an electronic device having a touchscreen display, the method comprising: displaying on the touchscreen display a graphical user interface (GUI) that includes a user interface element displayed in a default state at a location, the user interface element being associated with a function; changing the user interface element from the default state to a first state upon detecting a first input event at the location; and changing the user interface element from the first state to a second state upon detecting a second input event at the location.

According to another example embodiment is an electronic device, comprising a controller for controlling the operation of the electronic device; and a touchscreen display connected to the controller. The controller is configured to: (i) display on the touchscreen display a graphical user interface (GUI) that includes a user interface element displayed in a default state at a location, the user interface element being associated with a function; (ii) change the user interface element from the default state to a first state upon detecting a first input event at the location; and (iii) change the user interface element from the first state to a second state upon detecting a second input event at the location.

In accordance with another embodiment of the present disclosure, there is provided a computer-readable storage medium in an electronic device having a controller and a touchscreen display connected to the controller, the touchscreen display including a button location having an associated image in a default state displayed on the GUI. The medium has stored thereon, computer-readable and computer-executable instructions, which, when executed by a controller, cause the electronic device to perform steps comprising: detecting a first event at the button location within the touchscreen display, the button location being associated with a function, changing the associated image of the button location to a first state, detecting a second event at the button location, and changing the associated image of the button location to a second state.

## BRIEF DESCRIPTION OF THE DRAWINGS

FIG. 1 is a block diagram illustrating a mobile communication device in accordance with one embodiment of the present disclosure;

FIG. 2 is a front view of the mobile communication device of FIG. 1 in accordance with one embodiment of the present disclosure;

FIG. 3 is a simplified sectional view of the mobile communication device of FIG. 1 with the switch shown in a rest position;

FIG. 4 illustrates a Cartesian dimensional coordinate system of a touchscreen which map locations of touch signals in accordance with one embodiment of the present disclosure;

FIG. 5 is a front view of the mobile communications device of FIG. 1 illustrating a user interface screen of a handheld electronic device in accordance with one example embodiment of the present disclosure;

FIG. 6 illustrates a user interface screen of a handheld electronic device in accordance with one example embodiment of the present disclosure;

FIG. 7 illustrates a user interface screen of a handheld electronic device in accordance with one example embodiment of the present disclosure;

FIG. 8 is a front view of the mobile communications device of FIG. 1 illustrating a user interface screen of a handheld electronic device in accordance with one example embodiment of the present disclosure;

FIG. 9 illustrates a user interface screen of a handheld electronic device in accordance with one example embodiment of the present disclosure;

FIG. 10 illustrates a user interface screen of a handheld electronic device in accordance with one example embodiment of the present disclosure;

FIG. 11 illustrates a user interface screen of a handheld electronic device in accordance with one example embodiment of the present disclosure;

FIG. 12 illustrates a user interface screen of a handheld electronic device in accordance with one example embodiment of the present disclosure;

FIG. 13 illustrates a flowchart of a method described in the present application.

Like reference numerals are used in the drawings to denote like elements and features.

## DETAILED DESCRIPTION OF EXAMPLE EMBODIMENTS

The embodiments described herein generally relate to portable electronic devices. Examples of portable electronic devices include mobile (wireless) communication devices such as pagers, cellular/mobile phones, Global Positioning System (GPS) navigation devices and other satellite navigation devices, smartphones, wireless organizers, personal digital assistants (PDAs), tablet PCs, and wireless-enabled notebook computers. At least some of these portable electronic devices may be handheld electronic devices. The portable electronic device may be a portable electronic device without wireless communication capabilities such as a handheld electronic game device, digital photograph album, digital camera and video recorder such as a camcorder. The portable electronic devices could have a touchscreen display as well as a mechanical keyboard. These examples are intended to be non-limiting.

The present disclosure provides a method and touchscreen-based handheld electronic device having a graphical user interface (GUI), a touchscreen display and context and state dependent displays of functional areas or user interface elements on the touchscreen, such as function buttons, icons, links or messages, calendar entries or contact names.

In accordance with an example embodiment, there is generally provided a method and touchscreen-based handheld electronic device having context and state aware touchscreen display buttons are provided. In response to a defined user interface element such as a function area, icon, button, link or message in an application being selected on a touch screen display, the appearance of the selected area may be changed to a first state to indicate the area has been selected. In response to the selected function or area being activated, the appearance of the selected area may be changed to a second state to indicate that the function has been activated. The appearance of the user interface element (for example, a function area, icon, button, link or message) also may be changed in response to the application context or view or function chosen. The appearance of the user interface element may be altered to indicate the function associated with the user interface element is not available or the appearance may be altered to indicate a different function is available in a specific view or context of an application.

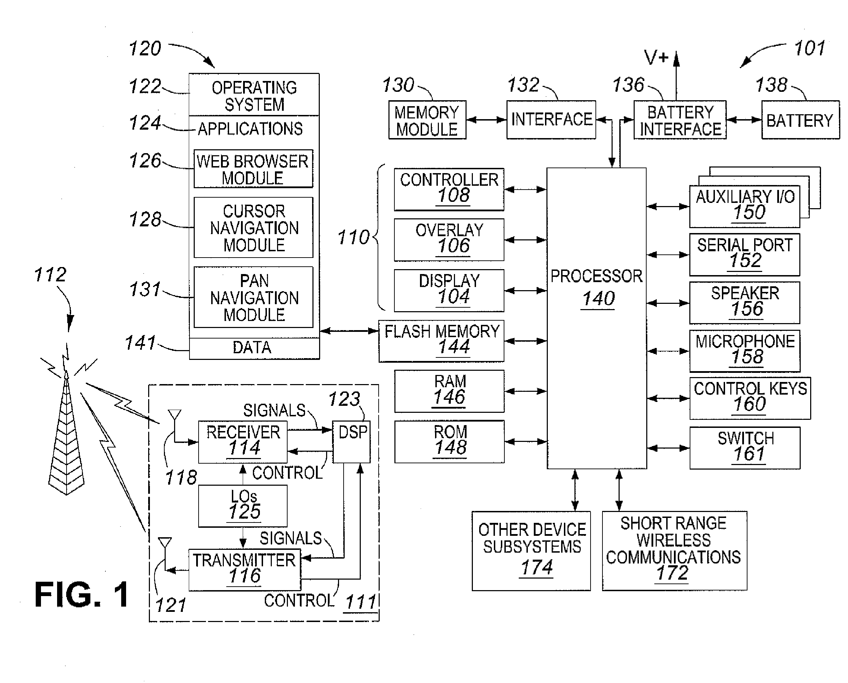

Reference is now made to FIGS. 1 to 3 which illustrate a mobile communication device 101 in which example embodiments described in the present disclosure can be applied. The mobile communication device 101 is an example of an electronic device. The mobile communication device 101 is a two-way communication device having at least data and possibly also voice communication capabilities, and the capability to communicate with other computer systems, for example, via the Internet. Depending on the functionality provided by the mobile communication device 101, in various embodiments the device may be a data communication device, a multiple-mode communication device configured for both data and voice communication, a smartphone, a mobile telephone or a PDA (personal digital assistant) enabled for wireless communication, or a computer system with a wireless modem.

The mobile communication device 101 includes a controller comprising at least one processor 140 such as a microprocessor which controls the overall operation of the mobile communication device 101, and a wireless communication subsystem 111 for exchanging radio frequency signals with the wireless network 112. The processor 140 interacts with the communication subsystem 111 which performs communication functions. The processor 140 interacts with additional device subsystems including a display (screen) 104, such as a liquid crystal display (LCD) screen, with a touch-sensitive input surface or overlay 106 connected to an electronic controller 108 that together make up a touchscreen display 110. The touch-sensitive overlay 106 and the electronic controller 108 provide a touch-sensitive input device and the processor 140 interacts with the touch-sensitive overlay 106 via the electronic controller 108.

The processor 140 interacts with additional device subsystems including flash memory 144, random access memory (RAM) 146, read only memory (ROM) 148, auxiliary input/output (I/O) subsystems 150, data port 152 such as serial data port, such as a Universal Serial Bus (USB) data port, speaker 156, microphone 158, control keys 160, pressure sensing device such as switch 361, short-range communication subsystem 172, and other device subsystems generally designated as 174. Some of the subsystems shown in FIG. 1 perform communication-related functions, whereas other subsystems may provide "resident" or on-device functions.

The communication subsystem 111 includes a receiver 114, a transmitter 116, and associated components, such as one or more antenna elements 118 and 221, local oscillators (LOs) 125, and a processing module such as a digital signal processor (DSP) 123. The antenna elements 118 and 221 may be embedded or internal to the mobile communication device 101 and a single antenna may be shared by both receiver and transmitter, as is known in the art. As will be apparent to those skilled in the field of communication, the particular design of the wireless communication subsystem 111 depends on the wireless network 112 in which mobile communication device 101 is intended to operate.

The mobile communication device 101 may communicate with any one of a plurality of fixed transceiver base stations 108 of the wireless network 112 within its geographic coverage area. The mobile communication device 101 may send and receive communication signals over the wireless network 112 after the required network registration or activation procedures have been completed. Signals received by the antenna 118 through the wireless network 112 are input to the receiver 114, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the DSP 123. In a similar manner, signals to be transmitted are processed, including modulation and encoding, for example, by the DSP 123. These DSP-processed signals are input to the transmitter 116 for digital-to-analog (D/A) conversion, frequency up conversion, filtering, amplification, and transmission to the wireless network 112 via the antenna 221. The DSP 123 not only processes communication signals, but may also provide for receiver and transmitter control. For example, the gains applied to communication signals in the receiver 114 and the transmitter 116 may be adaptively controlled through automatic gain control algorithms implemented in the DSP 123.

The processor 140 operates under stored program control and executes software modules 120 stored in memory such as persistent memory, for example, in the flash memory 144. The software modules 120 comprise operating system software 122, software applications 124 comprising a Web browser module 126, a cursor navigation module 128, and a pan navigation module 131. The pan navigation module 131 is a device application or application component which provides a pan (navigation) mode for navigating user interface screens displayed on the touchscreen display 110 (also referred as a page navigation mode and paper metaphor navigation mode). The cursor navigation module 128 is a device application or application component which provides a cursor (navigation) mode for navigating user interface screens displayed on the touchscreen display 110. The Web browser module 126 provides a Web browser application on the device 101. The pan navigation module 131 and cursor navigation module 128 are implemented in combination with one or more of the GUI operations implemented by the operating system 221, Web browser application, or one or more of the other software applications 124. The pan navigation module 131, cursor navigation module 128, and a Web browser module 126 modules may, among other things, each be implemented through stand-alone software applications, or combined together in one or more of the operating system 122, Web browser application, or one or more of the other software applications 124. In some embodiments, the functions performed by each of the above identified modules may be realized as a plurality of independent elements, rather than a single integrated element, and any one or more of these elements may be implemented as parts of other software applications.

Those skilled in the art will appreciate that the software modules 120 or parts thereof may be temporarily loaded into volatile memory such as the RAM 146. The RAM 146 is used for storing runtime data variables and other types of data or information, as will be apparent to those skilled in the art. Although specific functions are described for various types of memory, this is merely an example, and those skilled in the art will appreciate that a different assignment of functions to types of memory could also be used.

The software applications 124 may include a range of applications, including, for example, an address book application, a messaging application, a calendar application, and/or a notepad application. In some embodiments, the software applications 124 include an email message application, a push content viewing application, a voice communication (i.e. telephony) application, a map application, and a media player application. Each of the software applications 124 may include layout information defining the placement of particular fields and graphic elements (e.g. text fields, input fields, icons, etc.) in the user interface (i.e. the display device 104) according to the application.

In some embodiments, the auxiliary input/output (I/O) subsystems 150 may comprise an external communication link or interface, for example, an Ethernet connection. The mobile communication device 101 may comprise other wireless communication interfaces for communicating with other types of wireless networks, for example, a wireless network such as an orthogonal frequency division multiplexed (OFDM) network or a GPS transceiver for communicating with a GPS satellite network (not shown). The auxiliary I/O subsystems 150 may comprise a vibrator (not shown) for providing vibratory notifications in response to various events on the mobile communication device 101 such as receipt of an electronic communication or incoming phone call, or for other purposes such as haptic feedback (touch feedback).

In some embodiments, the mobile communication device 101 also includes a removable memory card 130 (typically comprising flash memory) and a memory card interface 132. Network access typically associated with a subscriber or user of the mobile communication device 101 via the memory card 130, which may be a Subscriber Identity Module (SIM) card for use in a GSM network or other type of memory card for use in the relevant wireless network type. The memory card 130 is inserted in or connected to the memory card interface 132 of the mobile communication device 101 in order to operate in conjunction with the wireless network 112.

The mobile communication device 101 stores data in an erasable persistent memory, which in one example embodiment is the flash memory 144. In various embodiments, the data includes service data comprising information required by the mobile communication device 101 to establish and maintain communication with the wireless network 112. The data may also include user application data such as email messages, address book and contact information, calendar and schedule information, notepad documents, image files, and other commonly stored user information stored on the mobile communication device 101 by its user, and other data. The data stored in the persistent memory (e.g. flash memory 144) of the mobile communication device 101 may be organized, at least partially, into a number of databases each containing data items of the same data type or associated with the same application. For example, email messages, contact records, and task items may be stored in individual databases within the device memory.

The serial data port 152 may be used for synchronization with a user's host computer system (not shown). The serial data port 152 enables a user to set preferences through an external device or software application and extends the capabilities of the mobile communication device 101 by providing for information or software downloads to the mobile communication device 101 other than through the wireless network 112. The alternate download path may, for example, be used to load an encryption key onto the mobile communication device 101 through a direct, reliable and trusted connection to thereby provide secure device communication.

In some embodiments, the mobile communication device 101 is provided with a service routing application programming interface (API) which provides an application with the ability to route traffic through a serial data (i.e., USB) or Bluetooth® connection to the host computer system using standard connectivity protocols. When a user connects their mobile communication device 101 to the host computer system via a USB cable or Bluetooth® connection, traffic that was destined for the wireless network 112 is automatically routed to the mobile communication device 101 using the USB cable or Bluetooth® connection. Similarly, any traffic destined for the wireless network 112 is automatically sent over the USB cable Bluetooth® connection to the host computer system for processing.

The mobile communication device 101 also includes a battery 138 as a power source, which is typically one or more rechargeable batteries that may be charged, for example, through charging circuitry coupled to a battery interface such as the serial data port 152. The battery 138 provides electrical power to at least some of the electrical circuitry in the mobile communication device 101, and the battery interface 136 provides a mechanical and electrical connection for the battery 138. The battery interface 136 is coupled to a regulator (not shown) which provides power V+ to the circuitry of the mobile communication device 101.

The short-range communication subsystem 172 is an additional optional component which provides for communication between the mobile communication device 101 and different systems or devices, which need not necessarily be similar devices. For example, the subsystem 172 may include an infrared device and associated circuits and components, or a wireless bus protocol compliant communication mechanism such as a Bluetooth® communication module to provide for communication with similarly-enabled systems and devices (Bluetooth® is a registered trademark of Bluetooth SIG, Inc.).

A predetermined set of applications that control basic device operations, including data and possibly voice communication applications will normally be installed on the mobile communication device 101 during or after manufacture. Additional applications and/or upgrades to the operating system 221 or software applications 124 may also be loaded onto the mobile communication device 101 through the wireless network 112, the auxiliary I/O subsystem 150, the serial port 152, the short-range communication subsystem 172, or other suitable subsystems 174 or other wireless communication interfaces. The downloaded programs or code modules may be permanently installed, for example, written into the program memory (i.e. the flash memory 144), or written into and executed from the RAM 146 for execution by the processor 140 at runtime. Such flexibility in application installation increases the functionality of the mobile communication device 101 and may provide enhanced on-device functions, communication-related functions, or both. For example, secure communication applications may enable electronic commerce functions and other such financial transactions to be performed using the mobile communication device 101.

The mobile communication device 101 may include a personal information manager (PIM) application having the ability to organize and manage data items relating to a user such as, but not limited to, instant messaging, email, calendar events, voice mails, appointments, and task items. The PIM application has the ability to send and receive data items via the wireless network 112. In some example embodiments, PIM data items are seamlessly combined, synchronized, and updated via the wireless network 112, with the user's corresponding data items stored and/or associated with the user's host computer system, thereby creating a mirrored host computer with respect to these data items.

The mobile communication device 101 may provide two principal modes of communication: a data communication mode and an optional voice communication mode. In the data communication mode, a received data signal such as a text message, an email message, or Web page download will be processed by the communication subsystem 111 and input to the processor 140 for further processing. For example, a downloaded Web page may be further processed by a browser application or an email message may be processed by an email message application and output to the display 242. A user of the mobile communication device 101 may also compose data items, such as email messages, for example, using the touch-sensitive overlay 106 in conjunction with the display device 104 and possibly the control buttons 160 and/or the auxiliary I/O subsystems 150. These composed items may be transmitted through the communication subsystem 111 over the wireless network 112.

In the voice communication mode, the mobile communication device 101 provides telephony functions and operates as a typical cellular phone. The overall operation is similar, except that the received signals would be output to the speaker 156 and signals for transmission would be generated by a transducer such as the microphone 158. The telephony functions are provided by a combination of software/firmware (i.e., the voice communication module) and hardware (i.e., the microphone 158, the speaker 156 and input devices). Alternative voice or audio I/O subsystems, such as a voice message recording subsystem, may also be implemented on the mobile communication device 101. Although voice or audio signal output is typically accomplished primarily through the speaker 156, the display device 104 may also be used to provide an indication of the identity of a calling party, duration of a voice call, or other voice call related information.

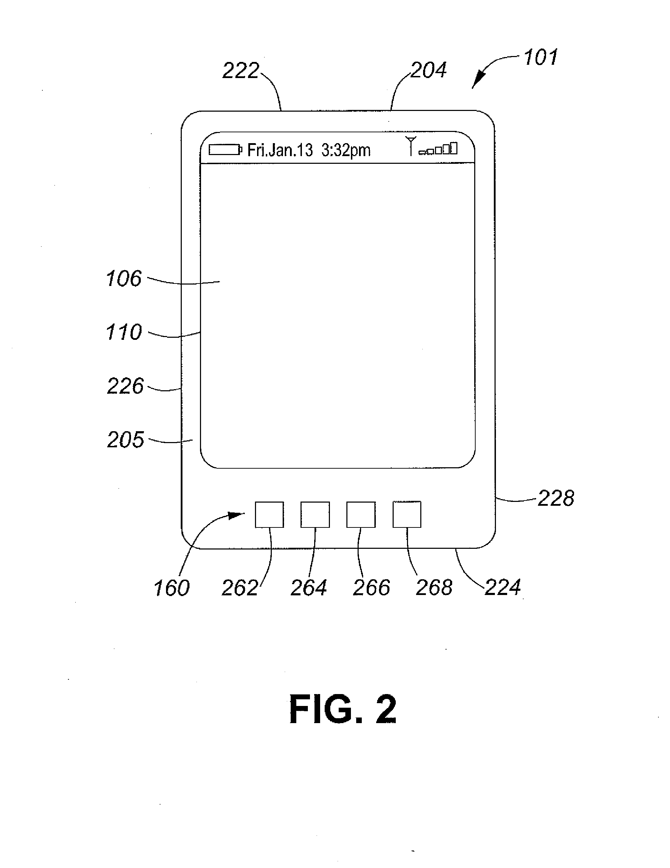

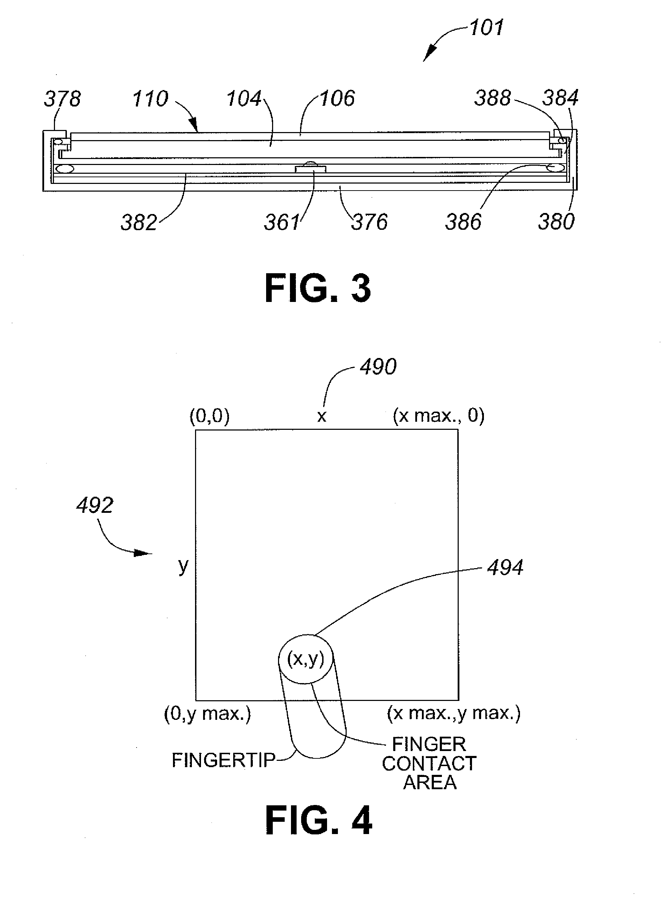

Referring now to FIG. 2 and 3, the construction of the device 101 will be described in more detail. The device 101 includes a rigid case 204 for housing the components of the device 101 that is configured to be held in a user's hand while the device 101 is in use. The touchscreen display 110 is mounted within a front face 205 of the case 204 so that the case 204 frames the touchscreen display 110 and exposes it for user-interaction therewith. The case 204 has opposed top and bottom ends designated by references 222, 224 respectively. The case 204 has opposed left and right sides designated by references 226, 228 respectively. The left and right sides 226, 228 extend transverse to the top and bottom ends 222, 224. In the shown embodiments of FIG. 2, the case 204 (and device 101) is elongate having a length defined between the top and bottom ends 222, 224 longer than a width defined between the left and right sides 226, 228. Other device dimensions are also possible.

The case 204 includes a back 76, a frame 378 which frames the touch-sensitive display 110, sidewalls 80 that extend between and generally perpendicular to the back 76 and the frame 378, and a base 382 that is spaced from and generally parallel to the back 76. The base 382 can be any suitable base and can include, for example, a printed circuit board or flex circuit board (not shown). The back 76 includes a plate (not shown) that is releasably attached for insertion and removal of, for example, the battery 138 and the memory module 130 described above. It will be appreciated that the back 76, the sidewalls 80 and the frame 378 can be injection molded, for example.

Although the case 204 is shown as a single unit it could, among other possible configurations, include two or more case members hinged together (such as a flip-phone configuration or a clam shell-style lap top computer, for example), or could be a "slider phone" in which the keyboard is located in a first body which is slide-ably connected to a second body which houses the display screen, the device being configured so that the first body which houses the keyboard can be slide out from the second body for use.

The display device 104 and the overlay 106 can be supported on a support tray 384 of suitable material such as magnesium for providing mechanical support to the display device 104 and overlay 106. The display device 104 and overlay 106 are biased away from the base 382, toward the frame 378 by biasing elements 386 such as gel pads between the support tray 384 and the base 382. Compliant spacers 388 which, for example, can also be in the form of gel pads are located between an upper portion of the support tray 384 and the frame 378. The touchscreen display 110 is moveable within the case 204 as the touchscreen display 110 can be moved toward the base 382, thereby compressing the biasing elements 386. The touchscreen display 110 can also be pivoted within the case 204 with one side of the touchscreen display 110 moving toward the base 382, thereby compressing the biasing elements 386 on the same side of the touchscreen display 110 that moves toward the base 382.

In the example embodiment, the switch 361 is supported on one side of the base 382 which can be a printed circuit board while the opposing side provides mechanical support and electrical connection for other components (not shown) of the device 101. The switch 361 can be located between the base 382 and the support tray 384. The switch 361, which can be a mechanical dome-type switch for example or other type of pressure sensing device, can be located in any suitable position such that displacement of the touchscreen display 110 resulting from a user pressing the touchscreen display 110 with a sufficient threshold force to overcome the bias and to overcome the actuation force for the switch 361, depresses and actuates the switch 361. In the present embodiment the switch 361 is in contact with the support tray 384. Thus, depression of the touchscreen display 110 by application of a force thereto above a threshold causes actuation of the switch 361, thereby providing the user with a positive tactile quality during user interaction with the user interface of the 101. The switch 361 is not actuated in the rest position shown in FIG. 3, absent applied force by the user. It will be appreciated that the switch 361 can be actuated by pressing anywhere on the touchscreen display 110 to cause movement of the touchscreen display 110 in the form of movement parallel with the base 382 or pivoting of one side of the touchscreen display 110 toward the base 382. The switch 361 is connected to the processor 140 and can be used for further input to the processor 140 when actuated. Although a single switch is shown any suitable number of switches can be used.

In some example embodiments rather than a discrete mechanical switch, the touchscreen display 110 could include an alternative form of pressure sensor which detects an amount of depression onto the touchscreen display 110. Once the pressure reaches or exceeds a predetermined threshold, the processor 140 determines that a switching activity has been actuated. In such embodiments, the processor 140 may be configured to output a digital "click" audible sound, through the speaker 156, advising the user that sufficient pressure has been applied.

The touchscreen display 110 can be any suitable touchscreen display such as a capacitive touchscreen display. In one example embodiment, the capacitive touchscreen display 110 can include the display device 104 and the touch-sensitive overlay 106 that is a capacitive touch-sensitive overlay. It will be appreciated that the capacitive touch-sensitive overlay 106 includes a number of layers in a stack and is fixed to the display device 104 via a suitable optically clear adhesive. The layers can include, for example a substrate fixed to the display device 104 (e.g. LCD display) by a suitable adhesive, a ground shield layer, a barrier layer, a pair of capacitive touch sensor layers separated by a substrate or other barrier layer, and a cover layer fixed to the second capacitive touch sensor layer by a suitable adhesive. The capacitive touch sensor layers can be any suitable material such as patterned indium tin oxide (ITO).

Each of the touch sensor layers comprises an electrode layer each having a number of spaced apart transparent electrodes. The electrodes may be a patterned vapour-deposited ITO layer or ITO elements. The electrodes may be, for example, arranged in an array of spaced apart rows and columns. The touch sensor layers/electrode layers are each associated with a coordinate (e.g., x or y) in a coordinate system used to map locations on the touchscreen display 110, for example, in Cartesian coordinates (e.g., x and y-axis coordinates). The intersection of the rows and columns of the electrodes may represent pixel elements defined in terms of an (x, y) location value which can form the basis for the coordinate system. Each of the touch sensor layers provides a signal to the controller 108 which represents the respective x and y coordinates of the touchscreen display 110. That is, x locations are provided by a signal generated by one of the touch sensor layers and y locations are provided by a signal generated by the other of the touch sensor layers.

The electrodes in the touch sensor layers/electrode layers respond to changes in the electric field caused by conductive objects in the proximity of the electrodes. When a conductive object is near or contacts the touch-sensitive overlay 106, the object draws away some of the charge of the electrodes and reduces its capacitance. The controller 108 receives signals from the touch sensor layers of the touch-sensitive overlay 106, detects touch events by determining changes in capacitance which exceed a predetermined threshold, and determines the centroid of a contact area defined by electrodes having a change in capacitance which exceeds the predetermined threshold, typically in x, y (Cartesian) coordinates.

The controller 108 sends the centroid of the contact area to the processor 140 of the device 101 as the location of the touch event detected by the touchscreen display 110. Depending on the touch-sensitive overlay 106 and/or configuration of the touchscreen display 110, the change in capacitance which results from the presence of a conductive object near the touch-sensitive overlay 106 but not contact the touch-sensitive overlay 106, may exceed the predetermined threshold in which case the corresponding electrode would be included in the contact area. The detection of the presence of a conductive object such as a user's finger or a conductive stylus is sometimes referred to as finger presence/stylus presence.

It will be appreciated that other attributes of a touch event on the touchscreen display 110 can be determined. For example, the size and the shape (or profile) of the touch event on the touchscreen display 110 can be determined in addition to the location based on the signals received at the controller 108 from the touch sensor layers. For example, the touchscreen display 110 may be used to create a pixel image of the contact area created by a touch event. The pixel image is defined by the pixel elements represented by the intersection of electrodes in the touch sensor layers/electrode layers. The pixel image may be used, for example, to determine a shape or profile of the contact area.

The centroid of the contact area is calculated by the controller 108 based on raw location and magnitude (e.g., capacitance) data obtained from the contact area. The centroid is defined in Cartesian coordinates by the value ($X_c$, $Y_c$). The centroid of the contact area is the weighted averaged of the pixels in the contact area and represents the central coordinate of the contact area. By way of example, the centroid may be found using the following equations:

$$X_c = \frac{\sum\limits_{i=1}^{n} Z_i * x_i}{\sum\limits_{i=1}^{n} Z_i} \quad\quad\quad\quad (1)$$

$$Y_c = \frac{\sum\limits_{i=1}^{n} Z_i * y_i}{\sum\limits_{i=1}^{n} Z_i} \quad\quad\quad\quad (2)$$

where $X_c$ represents the x-coordinate of the centroid of the contact area, $Y_c$ represents the y-coordinate of the centroid of the contact area, x represents the x-coordinate of each pixel in the contact area, y represents the y-coordinate of each pixel in the contact area, Z represents the magnitude (capacitance value or resistance) at each pixel in the contact area, the index i represents the electrodes in the contact area and n represents the number of electrodes in the contact area. Other methods of calculating the centroid will be understood to persons skilled in the art.

The controller 108 of the touchscreen display 110 is typically connected using both internal and serial interface ports to the processor 140. In this way, an interrupt signal which indicates a touch event has been detected, the centroid of the contact area, as well as raw data regarding the location and magnitude of the activated electrodes in the contact area are passed to the processor 140. However, in other embodiments only an interrupt signal which indicates a touch event has been detected and the centroid of the contact area are passed to the processor 140. In embodiments where the raw data is passed to the processor 140, the detection of a touch event (i.e., the application of an external force to the touch-sensitive overlay 106) and/or the determination of the centroid of the contact area may be performed by the processor 140 of the device 101 rather than the controller 108 of the touchscreen display 110.

Referring now to FIG. 4, a Cartesian (two dimensional) coordinate system used to map locations of the touchscreen display 110 in accordance with one embodiment of the present disclosure will be described. The touchscreen display 110 defines a Cartesian coordinate system defined by an x-axis 490 and y-axis 492 in the input plane of the touchscreen display 110. Each touch event on the touchscreen display 110 returns a touch point 494 defined in terms of an (x, y) value. The returned touch point 494 is typically the centroid of the contact area.

In the shown embodiment, the touchscreen display 110 has a rectangular touch-sensitive overlay 106; however, in other embodiments, the touch-sensitive overlay 106 could have a different shape such as a square shape. The rectangular touch-sensitive overlay 106 results in a screen which is divided into a rectangular of pixels with positional values ranging from 0 to the maximum in each of the x-axis 490 and y-axis 492 (x max. and y max. respectively). The x-axis 490 extends in the same direction as the width of the device 101 and the touch-sensitive overlay 106. The y-axis 492 extends in the same direction as the length of the device 101 and the touch-sensitive overlay 106.

The coordinate system has an origin (0, 0) which is located at the top left-hand side of the touchscreen display 110. For purposes of convenience, the origin (0, 0) of the Cartesian coordinate system is located at this position in all of the embodiments described in the present disclosure. However, it will be appreciated that in other embodiments the origin (0, 0) could be located elsewhere such as at the bottom left-hand side of the touchscreen display 110, the top right-hand side of the touchscreen display 110, or the bottom right-hand side of the touchscreen display 110. The location of the origin (0, 0) could be configurable in other embodiments.

Thus, touch screen display 110 provides the processor 140 of the mobile device 101 with the ability to detect the occurrence and location of input events such as a "tap" or a "touch event", namely when the touch screen display 110 is contacted by a finger or other object, or a "switch" or "click" event which occurs when a user provides sufficient pressure to activate the switch 361. Accordingly, in one example embodiment, the application of pressure on a screen location up to the switch threshold pressure will be detected as "touch event" without a "click event" and application of pressure on the screen location above the switch threshold which causes the activation or the switch 361 results in a "click event" in combination with a "touch event". In some embodiments, a reduction of touch pressure to below the switch threshold from the screen location is required to complete the detection of the "click event", however in other example embodiments such reduction in pressure is not required and the click event will be logged as soon as the pressure on the screen exceeds the switch pressure without waiting for the subsequent pressure removal.

During operation, a graphical user interface (GUI) for controlling the operation of the device is displayed on the touchscreen display 110. The GUI is rendered prior to display by the operating system 122 or an application 124 which causes the processor 140 to display content on the touchscreen display 110. The GUI of the device 101 has a screen orientation in which the text and user interface elements of the GUI are oriented for normal viewing. It will be appreciated that the screen orientation for normal viewing is independent of the language supported, that is the screen orientation for normal viewing is the same regardless of whether a row-oriented language or column-oriented language (such as Asian languages) is displayed within the GUI. Direction references in relation to the GUI, such as top, bottom, left, and right, are relative to the current screen orientation of the GUI rather than the device 101 or its case 204.

In embodiments such as that shown in FIG. 4 in which the display screen is rectangular in shape, the screen orientation is either portrait (vertical) or landscape (horizontal). A portrait screen orientation is a screen orientation in which the text and other user interface elements extend in a direction transverse (typically perpendicular) to the length (y-axis) of the display screen. A landscape screen orientation is a screen orientation in which the text and other user interface elements extend in a direction transverse (typically perpendicular) to the width (x-axis) of the display screen. In some embodiments, the GUI of the device 101 changes its screen orientation between a portrait screen orientation and landscape screen orientation in accordance with changes in device orientation. In other embodiments, the GUI of the device 101 does not change its screen orientation based on changes in device orientation.

In other embodiments, the touchscreen display 110 may be a display device, such as an LCD screen, having the touch-sensitive input surface 106 integrated therein. An example of such a touchscreen is described in commonly owned U.S. patent publication no. 2004/0155991, published August 12, 2004 (also identified as U.S. patent application no. 10/717,877, filed November 20, 2003) which is incorporated herein by reference.

While specific embodiments of the touchscreen display 110 have been described, any suitable type of touchscreen in the handheld electronic device of the present disclosure including, but not limited to, a capacitive touchscreen, a resistive touchscreen, a surface acoustic wave (SAW) touchscreen, an embedded photo cell touchscreen, an infrared (IR) touchscreen, a strain gauge-based touchscreen, an optical imaging touchscreen, a dispersive signal technology touchscreen, an acoustic pulse recognition touchscreen or a frustrated total internal reflection touchscreen. The type of touchscreen technology used in any given embodiment will depend on the handheld electronic device and its particular application and demands.

Referring again to FIG. 2, the control buttons or keys 160, represented individually by references 262, 264, 266, 268, which are located below the touchscreen display 110 on the front face 205 of the device 101 generate corresponding input signals when activated. The control keys 160 may be constructed using any suitable key construction, for example, the controls keys 160 may each comprise a dome-switch. In other embodiments, the control keys 160 may be located elsewhere such as on a side of the device 101. If no control keys are provided, the function of the control keys 262 - 268 described below may be provided by one or more virtual keys (not shown), which may be part of a virtual toolbar or virtual keyboard.

In some embodiments, the input signals generated by activating (e.g. depressing) the control keys 262 are context-sensitive depending on the current/active operational mode of the device 101 or current/active application 124. The key 262 may be a send/answer key which can be used to answer an incoming voice call, bring up a phone application when there is no incoming voice call, and start a phone call from the phone application when a phone number is selected within that application. The key 264 may be a menu key which invokes context-sensitive menus comprising a list of context-sensitive options. The key 266 may be an escape/back key which cancels the current action, reverses (e.g., "back up" or "go back") through previous user interface screens or menus displayed on the touchscreen display 110, or exits the current application 124. The key 268 may be an end/hang up key which ends the current voice call or hides the current application 124.

Now that an overview has been provided of a possible environment in which a touchscreen-based toolbar may operate, specific details of touchscreen-based toolbars will now be described according to example embodiments. In example embodiments, the processor 140 and mobile device 101 is configured to implement the functionality described below by computer code or instructions included in software applications 120.

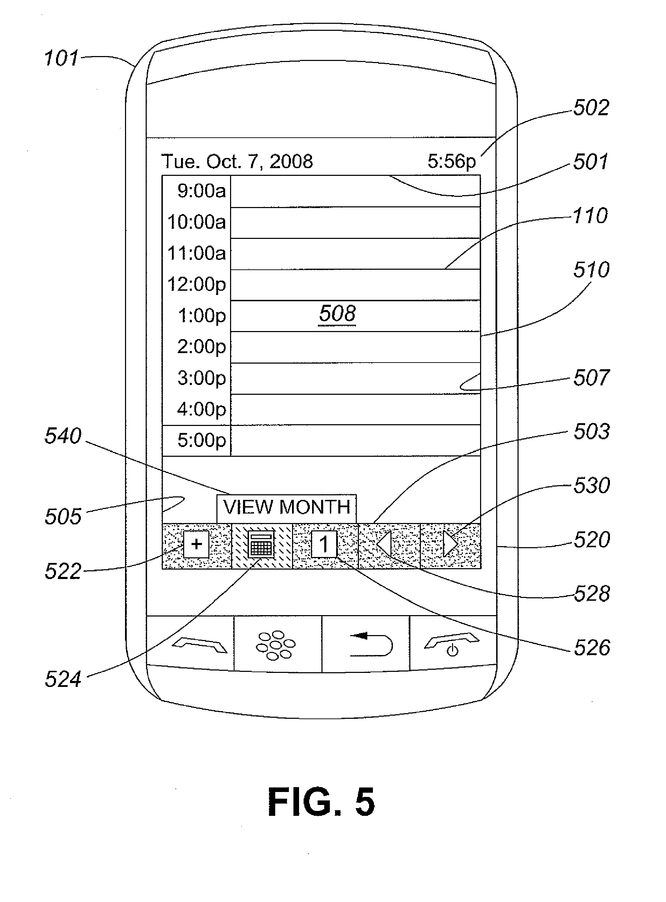

Referring now to FIG. 5, the graphical user interface (GUI) of the device 101 in accordance with one example embodiment of the present disclosure will now be described. FIG. 5 illustrates a user interface screen of a calendar application in a portrait screen orientation. The GUI includes a content area 508 defined by a virtual boundary 510. The virtual boundary 510 comprises a top boundary (or border) 501, a bottom boundary (or border) 503, a left boundary (or border) 505, and a right boundary (or border) 507. The virtual boundary 510 may constrain content displayed in the area 508 which is expandable in either the horizontal direction (e.g., left/right) of the GUI, the vertical direction (e.g., up/down) of the GUI, or both horizontal and vertical directions of the GUI.

The area 508 within the virtual boundary 510 may be bounded by other user interface elements or fields which may include selectable user interface elements such as icons, buttons or other user interface elements. In the present embodiment, the virtual boundary 510 borders the content area 508 in which a calendar page, such as a day view is displayed by the calendar application. However, other applications utilizing may display other content in the content area 508. In the shown embodiment, the top of the content area 508 is bounded by a status bar 502 which displays information such as the current date and time, icon-based notifications, device status and/or device state.

In the shown embodiments, an invokable horizontal toolbar 520 having a plurality of selectable virtual buttons is displayed below the content area 508. In other embodiments, the horizontal toolbar 520 may be located at the top of the content area 508 below the status bar 502. In yet other embodiments, the toolbar 520 may extend vertically on either the left or right side of the GUI. The horizontal toolbar 520 may be displayed (shown) or hidden in response to respective input from the touchscreen overlay 106. In the shown embodiment, the toolbar 520 extends horizontally across the GUI and includes five user interface elements in the form of buttons represented individually by references 522, 524, 526, 528 and 530, which are of equal size. The buttons 522, 524, 526, 528 and 530 are each associated with a respective function that can be performed by the processor 140 in response to user selection of the corresponding button. Functions include any commands, operations or actions that may be executed by the mobile communication device 101, including but not limited to those implemented by software applications 124. In the illustrated example, each of the buttons includes foreground lines defining an image that represents a user selectable function associated with the respective buttons. The foreground lines are provided on a background color. In other embodiments, a different number of buttons may be provided by the toolbar 520, and the buttons which are provided may be different sizes and may be spaced apart. In other embodiments a horizontal scrollbar (not shown) may be located above or below the content area 508 adjacent the top border 501 or adjacent the bottom border 503. A vertical scrollbar (also not shown) may be located on the right or left side of the content area 508 adjacent the right border 507 or adjacent the left border 505.

The toolbar 520 may always be shown on the touchscreen display 110 or a command, such as a single tap or touch event on the touchscreen display 110, may be used to cause the toolbar 520 to be shown/displayed when it is not currently displayed on the touchscreen display 110, and may cause the toolbar 520 to be hidden/removed from the touchscreen display 110 when it is currently displayed on the touchscreen display 110. A tap or touch event is detected when the touchscreen display 110 is touched by an object or finger, as described previously.

In example embodiments, a button in a toolbar 520 can be pre-selected or focussed when a touch event detected on the screen occurs in the location of the button. A button can be selected when a click event occurs. (As noted above, a click event occurs when the pressure applied to the display screen 110 exceeds the switch threshold required to trigger switch 361).

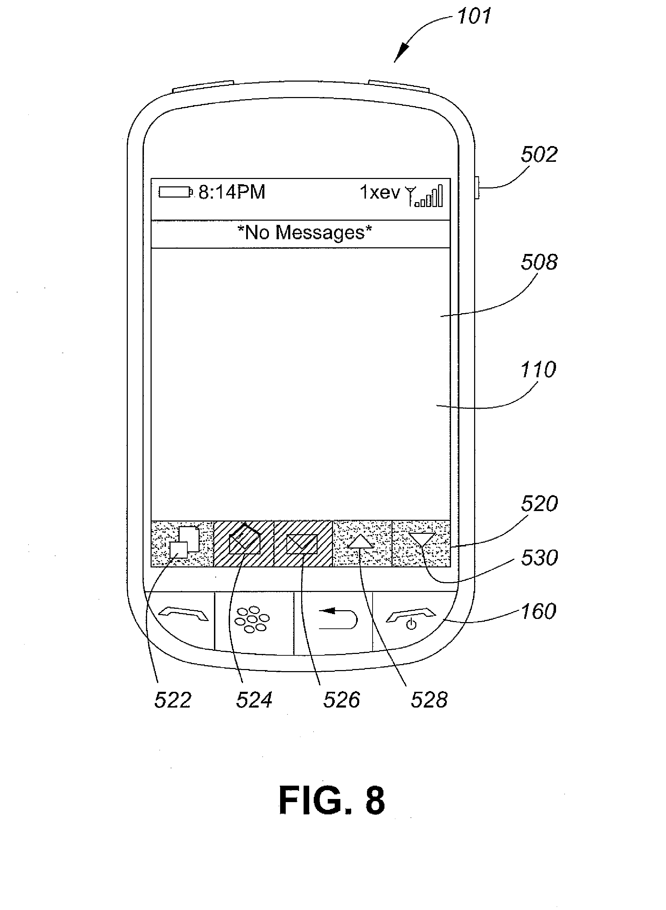

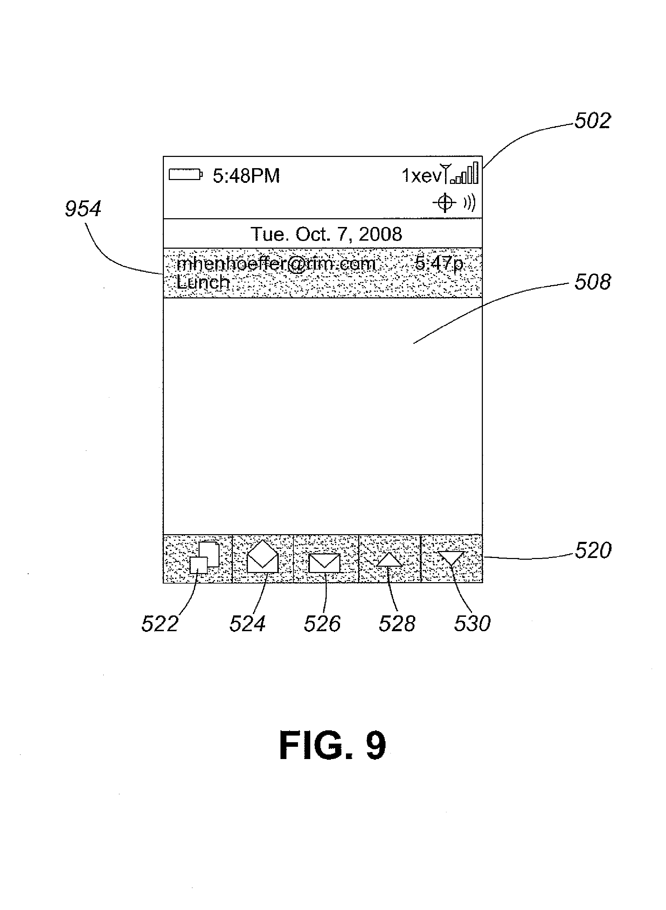

The buttons 522, 524, 526, 528 and 530 on the toolbar 520, or other user interface elements such as icons or links in the touchscreen display 110 may appear in a default state, such as the buttons 522, 526, 528 and 530 in FIG. 5 appearing in the same background colour. The display of buttons whose associated functions are not available in the current state of the application may have their foreground darkened and background coloured gray, or other visual differentiators may be used to show the function associated with the button is not available such that buttons that are associated with functions that can currently be selected are visually differentiated from buttons that can be selected. As shown in FIG. 8, for an email application, where no messages are displayed, images on the "Open Message" button 524 and "Delete Message" button 526 are coloured grey since these functions are not available if there are no messages. FIG. 9 illustrates the message list of the email application with one message 954 present. The images of the "Open Message" button 524 and "Delete Message" button 526 may be shown in the same light or contrasting colour as the buttons 522, 528 and 530, to indicate the function associated with the button is available and may be selected.

Accordingly, in one particular embodiment a button in toolbar 510 can be in any number of possible states. For example, the button can be either in a user selectable or available state or a non-selectable or inactive state depending on whether the function associated with a button is available at that time. By way of non-exhaustive examples, if a button is in an user selectable or available state, then it can also be in: (i) a default state indicating that it is available for user selection, (ii) a touched or focused or pre-selected state (when a touch event that is less that the switch threshold is detected at the location of the button), (iii) a click or selected state (when the pressure applied at the button location exceeds the switch threshold) (iv) a post-touch state (when pressure is removed from the button location without a click event having occurred); and (v) a post-click state (after a click event has occurred). In example embodiments, the controller 140 is configured to alter the display of the toolbar 520 to provide visual feedback of the current state of the toolbar buttons.

In this regard, in one example embodiment a user interface element such as a button on the toolbar 520, or other functional areas of the toolbar may be focused when a first input event such as a touch event on the touchscreen display is detected by or signalled to controller 140 at the location of the button.

The location of the touch event on the touchscreen display is sent to the processor 140 as described above. In response a first event such as a touch event, the processor 140 determines the user interface element (for example, a button, icon, link or other defined area on the GUI) has been touched, and changes the appearance of one or more of the text, image or color displayed as part of the user interface element to change from a default state to a first state. For example, in the case where the user interface element is a button, the button may be highlighted or focused using a first onscreen visual indicator. The change to a first state may include highlighting all or a selected area of the button, changing the background colour of the button or it may involve changing the appearance of the selected button from a first version (e.g., idle/unselected) of the button to a second version (e.g., focused/pre-selected) of the button. For example, as shown in FIG. 5, touching a button in the virtual toolbar 520, such as the "View Month" button 524, causes the background colour to be changed from black (unselected) to blue (focussed or pre-selected). That is, the button 524 is highlighted in blue to provide the user with a visual indication that the button has been focussed or pre-selected. Focussing or pre-selection of a user interface element such as a button, icon or link does not select or activate the user interface element or invoke the associated function. Activation of a function associated with the selected user interface element or button 524 requires a separate "click" action as described below. In other embodiments, rather than highlighting, the selected user interface element could be otherwise changed in appearance to provide the user with a visual indication of the user interface element which is currently focussed or pre-selected.

In some example embodiments, in response to the focussing or pre-selection of a user interface element such as a button, icon or link the processor 140 may create and display a text note 540 in the GUI near the focussed user interface element (for example button 524). The text note 540 may contain specific instructions or information to the user related to the user interface element that is selected. The text note information may be provided by applications 124 in respect of the functions that they support. A user interface element such as a button may need to be touched for a predetermined duration before being focussed or before the text note 540 is displayed.

In an example embodiment, selecting a user interface element such as a toolbar button of the GUI on the touchscreen display 110 requires a second input event such as a "click event" at a respective location on the touchscreen display 110. When a click event is detected, if the associated user interface element represents a function, such as a command or application 124, the processor 140 will initiate the actions required to carry out or execute the function, command or application 124 logically associated with the user interface element.

In example embodiments, in response to a second input event such as a click event, the processor 140 causes the appearance of the selected user interface element (such as a button, icon or link) to change to a second state. For example, once selected, the "View Month" button 524 in FIG. 5 may change to a brighter display (not shown). The change to a second state may include highlighting a selected area or button, changing the background colour of the button to a different colour or it may involve changing the appearance of the selected button to a further version (e.g., selected) of the button that will be different than the change to the first state described above. By way of non-limiting example, a button background that is black may indicate the button is in the default user selectable state, a button background that is blue may indicate a first state (e.g. pre-selected or focussed or touched state) in response to a touch event, and a button background that is a lighter blue may indicated the second state (e.g. clicked or selected state). In some embodiments, a click event may not be completed until the pressure applied to the button is released, in which case a button could have a further intermediate state that could be visually indicated as well - for example in the above blue/light blue example, the button could be a further shade of blue or a different colour when the button has been pressed beyond the switch threshold pressure but not yet released. In some example embodiments where a "click" event requires release of the button, the displayed button may not have the intermediate display state and may remain in the first, focussed state until the pressure is released, after which the selected button state will be displayed.

In some example embodiments, concurrent with the click event, the processor 240 may provide additional notifications or indicators to the user that a click event has occurred. Such notifications or indicators include but are not limited to sound (e.g. a digital "click" sound, a beep, a confirmatory voice message, or ringtone output through the speaker 156), tactical feedback (e.g., vibration from the vibrator, not shown), or temporary or permanently flashing of a light indicator (not shown). An example of a light indicator may be a light emitting diode (LED) (not shown) which is typically mounted on the mobile communication device 101 and configured to indicate that data is being transferred while the device 101 is in a data communication mode.

In example embodiments, once a button (or other display element) has been selected through a click event, a post-click state will happen on occurrence of one or more of the following: (a) when the function associated with the selected button is activated or initiated (note there can be a delay after a button is selected until the associated function is activated); (b) after a predetermined time has passed since the click event; or (c) when the pressure to the button is released (in cases where such release is not required to signal a click event). In some example embodiments, the selected button may have a further display state to indicate that the function has been activated (this could for example be the "unavailable" display state discussed above, if the application cannot be selected as it is currently active); in some example embodiments, the selected button may be changed back to its default state; in some example embodiments the button could be replaced with a button specific to the launched application. Among other things the selected button may return to a default state, or a focussed state.

In one example embodiment, if a button is focussed through a touch event but then released before a click event, its appearance may remain focussed until either a predetermined duration has passed from either the start or end of the touch event and then subsequently returned to the default state. Alternatively, the touch event for a different button may cause the first button to return to an unfocused condition and default appearance.

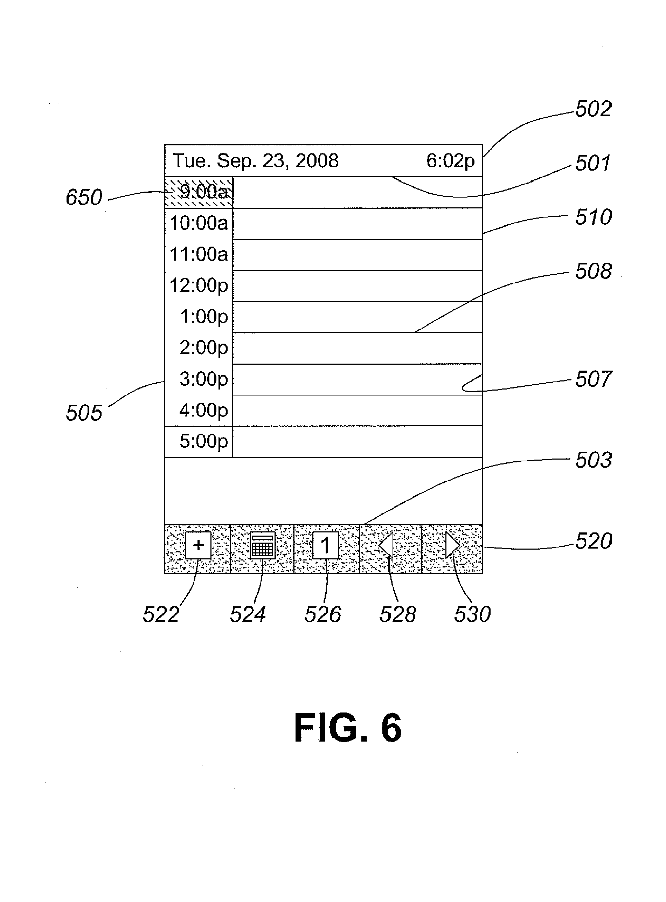

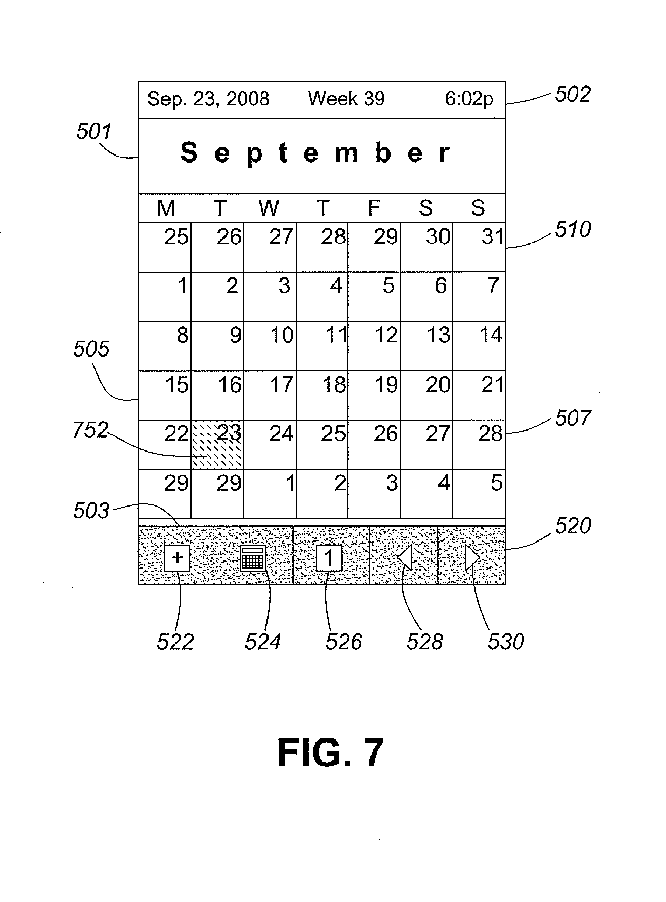

In addition to the function buttons 522, 524, 526, 528 and 530 of the toolbar 520, the appearance of other, icons, links or areas defined in the GUI for the touchscreen display 110 may be altered to indicate a focussed or pre-selected condition. A time area 650 may be highlighted in response to being pre-selected as shown in FIG. 6, or a day area 752 may be highlighted in response to being pre-selected as shown in FIG. 7. As shown in FIG. 9 for an email application, a message in a message list also may be pre-selected.

In example embodiments, the functions associated with the buttons 522, 524, 526, 528 and 530 and the text, image or icon displayed for each button also are context-sensitive. The text, image or icon displayed for each button provides an indication of the function that is available and associated with each button in the particular application and context of the application. That is, as shown in FIG. 5 for a calendar application, button 522 may indicate by a text label, icon or other graphic that it is associated with a create new calendar entry function, button 524 may indicate it is associated with a "View Month" function and button 526 may indicate it is associated with a "View Day" function as indicated by the images on the buttons. In the calendar application, button 528 may indicate it is associated with a "Previous" function indicated by an arrow pointing left, to select the previous day or month view and button 530 may indicate it is associated with a "Next" function indicated by an arrow pointing to the right to select the next day or month view. Similar functions may be associated with the buttons 522, 524, 526, 528 and 530 in the Day View (FIG. 6) and month view (FIG. 7).

As shown in FIG. 8 and FIG. 9, in the display for the message list of an email application, button 522 may indicate it is associated with a "Compose Message" function, button 524 may indicate it is associated with an "Open Message" or "Read Message" function, button 526 may indicate it is associated with a "Delete Message" function, button 528 may indicate it is associated with a "Scroll Up" function and button 530 may indicate it is associated with a "Scroll Down" function.

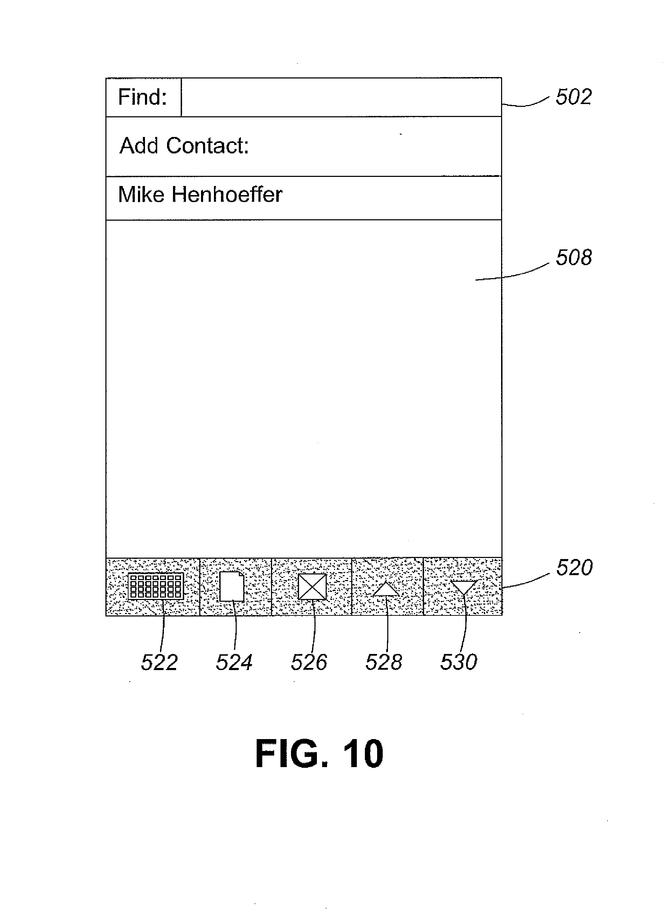

As shown in FIG. 10, the functions of the buttons 522, 524, 526, 528 and 530 and the text, image or icon displayed for each button also may depend on a chosen action or a selected view within an application. FIG. 10 illustrates the view to add a contact in an email application. Accordingly, button 522 may indicate it is associated with a "Display Keyboard" function, button 524 may indicate it is associated with an "Add Contact" function, button 526 may indicate it is associated with a "Delete Contact" function, button 528 may indicate it is associated with a "Scroll Up" function and button 530 may indicate it is associated with a "Scroll Down" function.

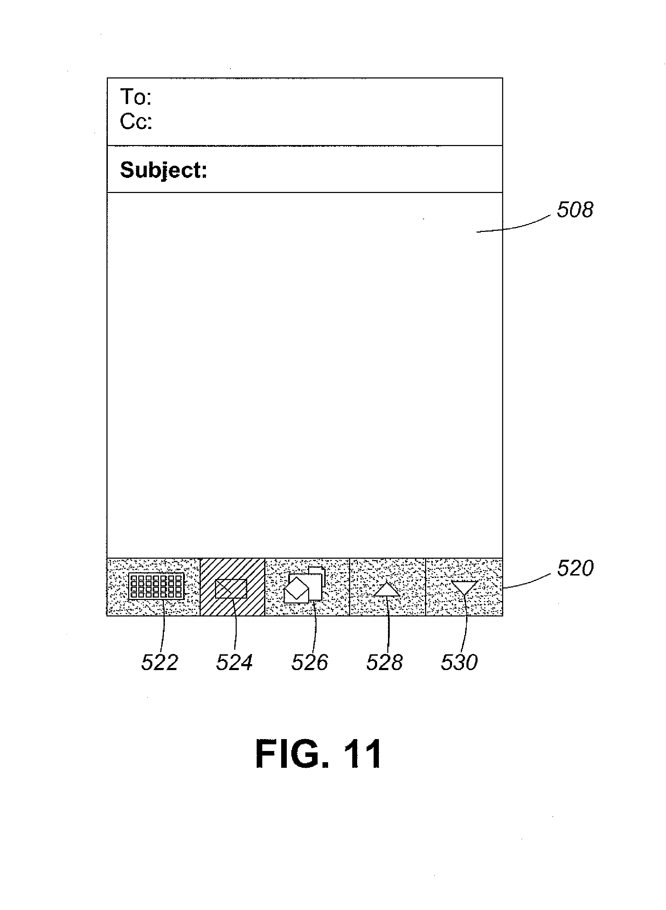

As shown in FIG. 11, in a view of an email application provided to compose a message, button 522 may indicate it is associated with a "Display Keyboard" function, button 524 may indicate it is associated with an "Send Message" function, button 526 may indicate it is associated with a "Save Message" function, button 528 may indicate it is associated with a "Scroll Up" function and button 530 may indicate it is associated with a "Scroll Down" function.

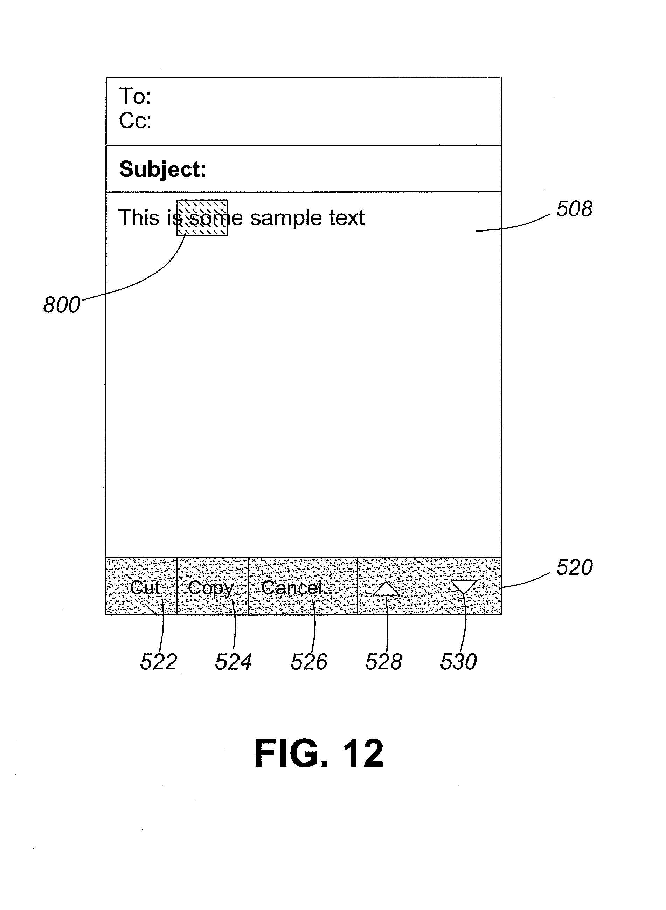

The function of the buttons 522, 524, 526, 528 and 530 and the text, image or icon displayed for each button may further depend on a predetermined event such as an action taken or command executed within a specific view and context of an application. As shown in FIG. 12, a message may be composed in the email application of FIG. 11. A portion of text may be pre-selected on the touchscreen display area 508 and shown as a highlighted portion 800 of the message. By touching two ends points in the message, the portion of the text between the two touch points is pre-selected and highlighted. As the portion of the text 800 is highlighted, new functions may become available within the application, such as "Cut", "Copy" and "Cancel" functions. The email application provides a new image, text or display for the function button to the user interface software. The text, images or icons displayed for the buttons 522, 524, 526, 528 and 530 may be changed to a further state indicative of the second function associated with buttons 522, 524, 526. As shown in FIG. 12, button 522 may indicate it is associated with a "Cut" function, button 524 may indicate it is associated with a "Copy" function and button 526 may indicate it is associated with a "Cancel" function. Button 528 may indicate it is associated with a "Scroll Up" function and button 530 may indicate it is associated with a "Scroll Down" function, as before. It will be apparent that any number of buttons may be changed in this view and that the text, image or icon displayed for one, more than one, or for all of the buttons 522, 524, 526, 528 and 530 may be changed in response to one or more predetermined events. Each application also may provide defined displays or images to the user interface software in order to display context specific functions associated with each button on the toolbar 520.

As described above, once a function button is pre-selected by a touch event, its appearance may be changed to a first state, such as a changing the background of the button display from black to blue. Upon activation of the button by a click event, the button display is changed to a second state, such as displaying a brighter image or text.

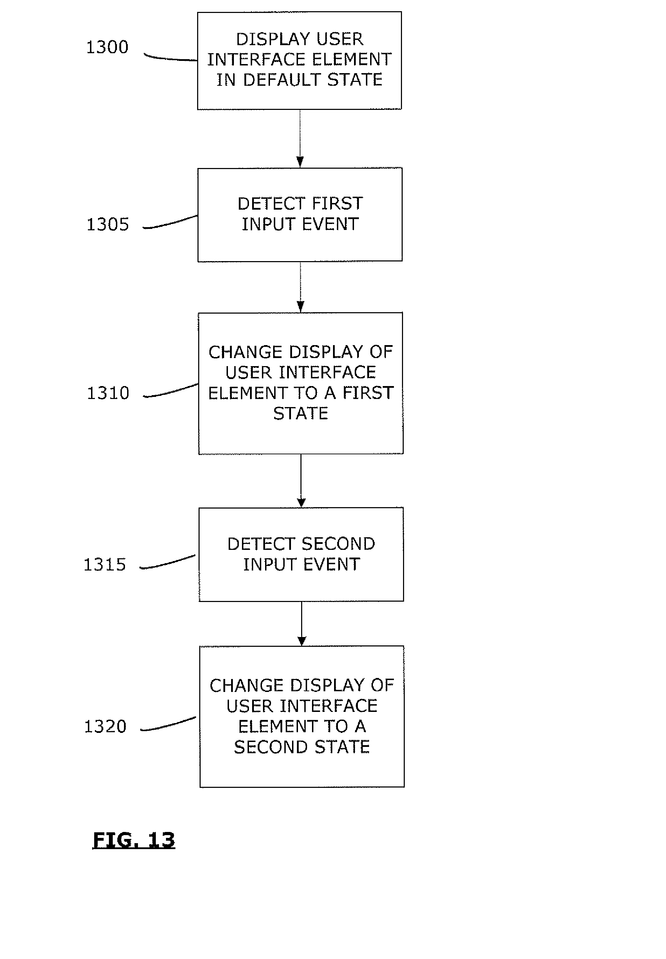

In summary, a method according to an example embodiment of the present disclosure is illustrated in Figure 13. A GUI which includes a user interface element, is displayed on the touchscreen display 110 of the mobile device 101. The user interface element is displayed in a default state at 1300. Upon detecting a first input event at 1305, the display of the user interface element is changed from the default state to a first state at 1310. Upon detecting a second input event at 1315, the display of the user interface element is changed from the first state to a second state at 1320.

It will be appreciated that as the display of a user interface element is changed from a default state to a first state and from a first state to a second state upon detection of input events, input events are acknowledged to a user such that in at least some circumstances additional and unnecessary input events at the mobile device 101 can be reduced or eliminated. In at least some circumstances, this can be beneficial to the operation of the mobile device 101 since the mobile device 101 is not slowed or interrupted by receiving additional input events. As well, a reduction in unnecessary input events, including a reduction of more forceful input events, may in some circumstances reduces possible damage to and extends the life of the touchscreen display 110.

While the present disclosure is primarily described in terms of methods, a person of ordinary skill in the art will understand that the present disclosure is also directed to various apparatus such as a handheld electronic device including components for performing at least some of the aspects and features of the described methods, be it by way of hardware components, software or any combination of the two, or in any other manner. Moreover, an article of manufacture for use with the apparatus, such as a pre-recorded storage device or other similar computer readable medium including program instructions recorded thereon, or a computer data signal carrying computer readable program instructions may direct an apparatus to facilitate the practice of the described methods. It is understood that such apparatus, articles of manufacture, and computer data signals also come within the scope of the present disclosure.

The term "computer readable medium" as used herein means any medium which can store instructions for use by or execution by a computer or other computing device including, but not limited to, a portable computer diskette, a hard disk drive (HDD), a random access memory (RAM), a read-only memory (ROM), an erasable programmable-read-only memory (EPROM) or flash memory, an optical disc such as a Compact Disc (CD), Digital Versatile Disc (DVD) or Blu-ray™ Disc, and a solid state storage device (e.g., NAND flash or synchronous dynamic RAM (SDRAM)).

The various embodiments presented above are merely examples and are in no way meant to limit the scope of this disclosure. Variations of the innovations described herein will be apparent to persons of ordinary skill in the art, such variations being within the intended scope of the present application. In particular, features from one or more of the above-described embodiments may be selected to create alternative embodiments comprised of a sub-combination of features which may not be explicitly described above. In addition, features from one or more of the above-described embodiments may be selected and combined to create alternative embodiments comprised of a combination of features which may not be explicitly described above. Features suitable for such combinations and sub-combinations would be readily apparent to persons skilled in the art upon review of the present application as a whole. The subject matter described herein and in the recited claims intends to cover and embrace all suitable changes in technology.

**Claims**

1. A method of controlling an electronic device (101) having a touchscreen display (110), the method comprising:

   displaying on the touchscreen display (110) a graphical user interface (GUI) that includes a user interface element (522, 524, 526, 528, 530, 650, 752, 954) displayed in a default state at a location, the user interface element (522, 524, 526, 528, 530, 650, 752, 954) being associated with a function;
   changing the user interface element (522, 524, 526, 528, 530, 650, 752, 954) from the default state to a first state upon detecting a first input event at the location; and
   changing the user interface element (522, 524, 526, 528, 530, 650, 752, 954) from the first state to a second state upon detecting a second input event at the location.

2. The method of claim 1 comprising activating the function in response to detecting the second input event at the location.

3. The method of claim 1 or 2 comprising changing the user interface element (522, 524, 526, 528, 530, 650, 752, 954) to indicate an inactive state when the function is not available.

4. The method of any one of claims 1 to 3 comprising changing the user interface element (522, 524, 526, 528, 530, 650, 752, 954) from the second state to a third state upon detecting that the function has been activated.

5. The method of any one of claims 1 to 4 wherein detecting the first input event comprises detecting a touch event at the location.

6. The method of claim 5 wherein the step of detecting the second input event includes detecting a depression of the location on the touchscreen display (110) at or above a predetermined threshold that exceeds the touch event.

7. The method of any one of claims 1 to 6 wherein the user interface element (522, 524, 526, 528, 530, 650, 752, 954) includes a button, icon, or link.

8. The method of any one of claims 1 to 7 wherein the electronic device (101) comprises a dome switch that is activated when the location on the touch screen is depressed at or above the predetermined threshold.

9. The method of any one of claims 1 to 8 comprising:

changing the context of the GUI upon detecting a predetermined input event on the touchscreen display (110) remote from the location;

changing, based on the change in context of the GUI, the function associated with the location to a second function; and

changing the user interface element (522, 524, 526, 528, 530, 650, 752, 954) of the location to a further state indicative of the second function.

10. The method of any one of claims 1 to 9 wherein the first state has a first colour for at least part of the user interface element (522, 524, 526, 528, 530, 650, 752, 954) and the second state has a second colour for the at least part of the user interface element (522, 524, 526, 528, 530, 650, 752, 954).

11. An electronic device (101), comprising:

a controller (140) for controlling the operation of the electronic device (101);

a touchscreen display (110) connected to the controller (140); the controller (140) being configured to cause the electronic device to perfrom teh method of anyone of claims to 10.

12. The electronic device (101) of claim 11 wherein the electronic device (101) is a mobile communication device configured for wireless communications.

13. A computer program product comprising a computer-readable storage medium storing program code thereon for enabling an electronic device (101) the perform the method of anyone of claims 1 to 12.

**FIG. 1**

EP 2 175 359 A2

**FIG. 2**

*378*    *110*    *104*    *106*     *388*   *384*

*101*

*382*     *361*    *376*    *386*    *380*

# FIG. 3

*490*

(0,0)     x     (x max., 0)

*492*

y

*494*

(x,y)

(0,y max.)       (x max.,y max.)

FINGER
CONTACT
AREA

FINGERTIP

# FIG. 4

**FIG. 5**

| | |
|---|---|
| Tue. Sep. 23, 2008 | 6:02p |
| 9:00a | |
| 10:00a | |
| 11:00a | |
| 12:00p | |
| 1:00p | |
| 2:00p | |
| 3:00p | |
| 4:00p | |
| 5:00p | |

502
501
510
508
507
503
520

650
505

+ 522
▦ 524
1 526
◁ 528
▷ 530

## FIG. 6

501

502

| Sep. 23, 2008 | Week 39 | 6:02p |
|---|---|---|

## S e p t e m b e r

510

| M | T | W | T | F | S | S |
|---|---|---|---|---|---|---|
| 25 | 26 | 27 | 28 | 29 | 30 | 31 |
| 1 | 2 | 3 | 4 | 5 | 6 | 7 |
| 8 | 9 | 10 | 11 | 12 | 13 | 14 |
| 15 | 16 | 17 | 18 | 19 | 20 | 21 |
| 22 | 23 | 24 | 25 | 26 | 27 | 28 |
| 29 | 29 | 1 | 2 | 3 | 4 | 5 |

505

752

507

503

520

| + | 🖩 | 1 | ◁ | ▷ |
|---|---|---|---|---|

522     524     526     528     530

# FIG. 7

101

502

508

110

520

530

160

8:14PM     1xev

*No Messages*

522    524    526    528

# FIG. 8

502

□ 5:48PM          1xev⛛₀₀ₗₗ₰

954

⊕ ))

Tue. Oct. 7, 2008

mhenhoeffer@rim.com      5:47p
Lunch

508

520

522    524    526    528    530

# FIG. 9

Find:　　　　　　　　　　　　　　　　502

Add Contact:

Mike Henhoeffer

508

520

522　　524　　526　　528　　530

# FIG. 10

To:
Cc:

**Subject:**

508

520

522  524  526  528  530

# FIG. 11

To:
Cc:

**Subject:**

This is some sample text

508

800

Cut  Copy  Cancel  △  ▽

520

522    524    526    528    530

# FIG. 12

1300 — DISPLAY USER INTERFACE ELEMENT IN DEFAULT STATE

1305 — DETECT FIRST INPUT EVENT

1310 — CHANGE DISPLAY OF USER INTERFACE ELEMENT TO A FIRST STATE

1315 — DETECT SECOND INPUT EVENT

1320 — CHANGE DISPLAY OF USER INTERFACE ELEMENT TO A SECOND STATE

**FIG. 13**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040155991 A

- US 71787703 A